(19) Europäisches Patentamt
European Patent Office
Office européen des brevets

(11) Publication number: 0 518 944 B1

(12) # EUROPEAN PATENT SPECIFICATION

(45) Date of publication of patent specification: **27.04.94 Bulletin 94/17**

(51) Int. Cl.$^5$: **C08F 4/649,** C08F 4/685

(21) Application number: **91905639.0**

(22) Date of filing: **05.03.91**

(86) International application number: **PCT/US91/01483**

(87) International publication number: **WO 91/13914 19.09.91 Gazette 91/22**

(54) **1-OLEFIN (CO)POLYMERIZATION CATALYST FOR PRODUCTION OF RESINS WITH A BROAD RANGE OF MOLECULAR WEIGHT DISTRIBUTION.**

(30) Priority: **07.03.90 US 489581**

(43) Date of publication of application: **23.12.92 Bulletin 92/52**

(45) Publication of the grant of the patent: **27.04.94 Bulletin 94/17**

(84) Designated Contracting States: **BE DE FR GB IT NL**

(56) References cited:
**EP-A- 0 134 100**
**EP-A- 0 185 521**
**EP-A- 0 286 001**
**EP-A- 0 324 585**

(73) Proprietor: **EXXON CHEMICAL PATENTS INC.**
**1900 East Linden Avenue**
**Linden, New Jersey 07036-0710 (US)**

(72) Inventor: **CHANG, Main**
**1827 Orchard Country Lane**
**Houston, TX 77062 (US)**

(74) Representative: **Veldhuizen, Albert Dirk Willem et al**
**Exxon Chemical Limited European Patents and Licences Exxon Chemical Technology Centre P.O. Box 1**
**Abingdon Oxfordshire OX13 6BB (GB)**

EP 0 518 944 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Field of the Invention

This invention relates to a mixed metal catalyst component and a method of utilizing such catalyst component to polymerize olefins to form polyolefins of controlled molecular weight distribution (MWD) within a wide range of MWD values. The mixed metal catalyst component of the invention is prepared by treating an inert oxide support with an organometallic compound of a Group IIa element, a halogen containing compound of a Group IIIa-IVa element, a Group IVb metal compound and a Group Vb metal compound. Magnesium is the preferred Group IIa element; titanium is the preferred metal for the Group IVb compound and vanadium is the preferred metal for the Group Vb compound. Accordingly, the most preferred mixed metal catalyst component is one containing on an inert oxide support Mg- Ti-V metals. One embodiment of a preferred Mg-Ti-V containing catalyst component is prepared by depositing on a catalyst support a homogeneous hydrocarbon solution mixture of a magnesium alkoxide, a titanium alkoxide and alkoxy vanadate compound followed by addition to the so deposited support of a halogen-containing compound of a Group IIIa element and a hydrocarbyl carboxylic acid derivative. Alternatively, the Mg-Ti-V containing catalyst component may be formed by reacting, in the presence of a catalyst support, a magnesium dialkyl compound with a halogen-containing compound of a Group IIIa-IVa element, vanadium compound. The Mg-Ti-V containing catalyst component when cocatalyzed with an organoaluminum compound, provides a catalyst system for the polymerization of olefins to polyolefins of controlled MWD, with a range of from narrow to broad, responsive to the presence and amount of a halogenated hydrocarbon control compound introduced to the polymerization zone along with such catalyst system during the process of olefin polymerization.

#### 2. Description of the Prior Art

The properties which an olefin polymerization process must bestow on the final polyolefin product are dictated by the end use application for which the polyolefin is intended. For example, in producing a polyolefin resin via a gas or slurry phase polymerization process, it is desirable to produce polymer of relatively narrow MWD. Similarly, narrow MWD's are desirable for resin applications such as injection molding or extrusion blown film production. For other applications, such as blow molding, it is desirable to produce a high molecular weight resin having a broad MWD. In yet other applications, such as extrusion manufacture, it is desirable for the resin to have a MWD of intermediate breadth.

It would thus be desirable to have a catalyst system for the production of polyolefins having an easily and accurately controllable MWD ranging from broad to narrow, as desired, depending on the intended use of the resin product. A clear need exists in the industry for a catalyst which provide resins of a specific MWD over a wide molecular weight and density range.

The polymerization of olefins catalyzed by Ziegler-Natta catalysts is well known. It is also known that molecular weight control agents, such as hydrogen, may be utilized with a Ziegler-Natta catalyst to control the molecular weight of the product polyolefins within a desired range.

Many specific compositions of Ziegler-Natta type catalysts have been disclosed which incorporate specific modifying components found to be effective in increasing the catalyst system activity or in enhancing other specific polymer properties, such as isotacticity and the like.

Mixed transition metal Ziegler-Natta catalysts are also well known. For example, catalysts containing both titanium and vanadium are known to provide enhanced catalyst activity. Other examples of mixed transition metal Ziegler-Natta catalysts include Ti/Cr and Ti/Zr. In the case of Ti/V mixed catalyst systems, it has been noted that the ratio of titanium to vanadium (Ti:V) often influences the resulting MWD of the product polyolefin. See for example U.S. Patent Nos. 4,385,161 and 4,397,762.

Accordingly, in Ti-V mixed metal catalysts heretofore, a typical procedure employed for producing a polyolefin of targeted MwD has been to control the Ti:V ratio of the catalyst component. This method of controlling the MWD of the polyolefin product, though effective, is burdened with several serious disadvantages when utilized in commercial production operations. Since in this approach the MWD of the polymer products is determined at the time of the manufacture of the catalyst, there is a direct one-to-one correspondence between a particular catalyst and the polymer MWD. The polymer MWD is specific to the catalyst itself and is predetermined at the time of the manufacture of the catalyst. This is a disadvantage in commercial operations where it is desirable to produce a wide variety of products having a variety of MWD's. Using the typical approach makes it necessary to manufacture and stockpile a wide variety of different catalyst components of varying

Ti:V ratios. This is tedious and expensive and creates operational difficulties during catalyst transition periods.

The alternative, that of using catalysts of different types, such as metallocene-alumoxane catalyst for production of narrow MWD polyolefins or such as a conventional Zeigler-Natta non-metallocene type for production of broad MWD polyolefins, entails the same disadvantages in commercial operations, namely, separate catalyst manufacture, stockpile, and changeover.

It would be highly desirable to have the capability of readily controlling the MWD of a polyolefin product independently of the composition of the specific catalyst component used. That is, it would be desirable to develop a technique which would allow the polyolefin product MWD to be controlled independently of the composition of the catalyst system being used, and which would allow the MWD of the polyolefins to be effectively controlled over a wide range of values with a catalyst system of a single composition.

## SUMMARY OF THE INVENTION

This invention describes novel catalyst formulations which have the capability of producing polyolefin resins of a particular MWD within a broad range of MWD's. With a catalyst formulation of the invention, the control parameter used to change the MWD of the polyolefin product is the amount of a halogentated hydrocarbon control compound fed into the reactor during polymerization with the novel catalyst formulation. There are several advantages to this invention. First, only one catalyst formulation is needed to make polyolefin resins with different MWD. This simplifies catalyst production and reduces its cost. Second, only one catalyst needs to be fed to the reactor. This eliminates operational problems and reduces the cost of operations. Finally, small operational adjustments, not involving change of catalyst, can be used to quickly change product MWD over a broad range of MWDs to meet changing market demand.

## DESCRIPTION OF THE PREFERRED EMBODIMENTS

The catalyst component of the present invention comprises a solid product resulting from treatment of (A) an inert support material with (B) an organometallic compound of a Group IIa element, (C) a halide compound of a Group IIIa-IVa element, (D) a Group IVb metal compound and (E) a Group Vb metal compound. The so resulting solid catalyst component, when reacted with (F) an organoaluminum compound, forms a catalyst system which is active for the polymerization of olefins to polyolefins. The catalyst component of the invention is responsive to (G) halogenated hydrocarbons as a control on the molecular weight distribution (MWD) of the polyolefin produced with such catalyst system. Hence, predetermined amounts of (G), a halogenated hydrocarbon, may be introduced into the polymerization reaction zone during reaction to control the product polymer MWD.

Preferred embodiments of the catalyst component of the present invention employ magnesium as the Group IIa element, titanium as the Group IVb metal, vanadium as the Group Vb metal and as the inert support, a Group IIa, IIIa, IVa or IVb metal oxide in finely divided form. With the preferred components, one embodiment of a Mg-Ti-V containing catalyst component is the solid product resulting from treating (A) an inert support material with at least (B') an alkyl magnesium compound, (C) a halide Group IIIA metal compound, (D) a titanium compound, and (E) a vanadium compound. In another embodiment, the magnesium, titanium and vanadium compounds may all be alkoxides, in which event the Mg-Ti-V containing catalyst component is conveniently prepared by adding the (A) inert support material to a homogeneous hydrocarbon solution containing therein a (B") magnesium alkoxide, a (D") titanium alkoxide and a (E") an alkoxy vanadate compound and permitting the support material to react with such solution after which the (C) halide Group IVa metal compound and a (H) acyl halide compound are reacted with the so treated support. However formed, the Mg-Ti-V containing catalyst component may be optionally prereduced by reacting it with (F) an organoaluminum compound, and then dried to a free-flowing powder. The catalyst component is activated by reacting it with an organoaluminum compound as a cocatalyst during the polymerization reaction. Predetermined amounts of (G), a halogenated hydrocarbon, are introduced into the polymerization reaction zone during reaction to control the product polymer MWD.

## Support Materials

The support material can be any of the solid particulate porous supports such as talc, silica, alumina, zirconia, thoria, magnesia, and titania. Preferably the support material is a Group IIA, IIIA, IVA and IVB metal oxide in finely divided form. Suitable inorganic oxide materials which are desirably employed in accordance with this invention include silica, alumina, and silica-alumna and mixtures thereof, with silica being most preferred. Other inorganic oxides that may be employed either alone or in combination with the silica, alumina,

or silica-alumina are magnesia, titania, zirconia, and the like. Additional suitable support materials include finely divided polyolefins such as finely divided polyethylene.

The support, if a metal oxide particulate material, is preferably dried by heating under a flowing inert gas, preferably nitrogen, to a temperature in the range of 200 C° to 800 C, preferably to a temperature range of 500°C to 800°C.

Magnesium Compound

The magnesium compounds useful in preparing catalyst components of the invention are of the general formula

$$RMgR'$$

and

$$ROMgOR'$$

where R and R' are alkyl groups which may or may not be the same. Wherein the magnesium compound is a dialkylmagnesium compound R and R' are $C_{2-20}$ alkyl groups. Examples of suitable alkyl magnesium compounds include butyl ethyl magnesium, dibutyl magnesium, dihexyl magnesium, di-2-ethyl hexyl magnesium, and dioctyl magnesium. Wherein the magnesium compound is a dialkoxy magnesium compound R and R' are $C_{6-20}$ alkyl groups. Examples of suitable magnesium dialkoxides include magnesium 2-methylpentoxide, magnesium 3-methylpentoxide, magnesium isohexoxide, magnesium hexoxide, and magnesium 2-ethylhexoxide. The magnesium compound is dissolved in a hydrocarbon solvent and added to the support. Suitable hydrocarbon solvents include pentane, hexane, heptane, octane, 2-ethyl hexane, benzene, toluene, or mixtures of these hydrocarbons, which are liquid at reaction temperatures and in which the individual ingredients are soluble. The amount of solvent used is not critical. The amount employed should, however, be sufficient to provide adequate capability for heat transfer removal from the catalyst components during reaction and to permit good mixing. The quantity of magnesium deposition can range from 0.01 to 1000 millimoles/g support, preferably in the range of 0.1 to 100 millimoles/g support, with 0.5 to 10.0 millimoles/g support being most preferred.

Halide Coympound of a Group IIIa-IVa Element

The halogen-containing Group III-IVa compounds, useful in preparing catalyst components of the invention are of the general formula:

$$H_aM^1X^1_bR^1_{(c-b-a)}$$

wherein $M^1$ is boron, carbon, silicon or mixtures thereof; $X^1$ is a halogen;

$R^1$ is a hydrocarbyl or alkoxy radical having 1 to 20 carbon atoms;

"a" is zero when $M^1$ is boron and is a number greater than zero and less than or equal to 2 when $M^1$ is silicon or carbon;

"b" is a number equal to or greater than 1 when $M^1$ is boron and greater than 1 when $M^1$ is silicon or carbon; and

"c" is the maximum valency of the element $M^1$.

$R^1$ in this formula may be an aliphatic, alicyclic or aromatic hydrocarbon group. Exemplary groups include methyl, ethyl, propyl, butyl, amyl, hexyl, haptyl, octyl, nonyl, decyl, cetyl, stearyl, 2-ethylhexyl, cyclopentyl, cyclohexyl, phenyl, cresyl and naphthyl. Halogen atoms $X^1$ include chlorine, bromine, iodine, and fluorine, and of these halogen atoms, chlorine is preferred. Where $M^1$ is carbon, the formula describes suitable compounds which include Freon-11, chloroform, carbon tetrachloride and other halogen-containing hydrocarbons with from 1 to 20 carbon atoms, preferably from 1 to 6 carbon atoms. Where $M^1$ is boron, the formula describes the boron halide compounds useful individually or in combination, including boron trichloride, boron tribromide, boron ethyldichloride, boron ethyloxide dichloride, boron diethyloxide chloride, boron hexyldichloride, boron hexyloxide dichloride, boron benzyldichloride, boron phenyldichloride, and boron diphenyloxide chloride. Boron trichloride is the preferred boron compound. Where $M^1$ is silicon, the formula describes chlorosilane compounds useful individually or in combination, which include trichlorosilane, methyldichlorosilane, ethyldichloro-silane, n-propyldichlorosilane, iso-propyldichloro-silane, n-buytldichlorosilane, benzyldichlorosilane, parachlorobenzyldichlorosilane, toluyldichlorosilane, naphthalyldichlorosilane, vinyldichlorosilane, allyldichlorosilane, monomethylchlorosilane, diethylchlorosilane, methyl isopropylchlorosilane, methylbenzylchlorosilane, and dibenzylchlorosilane .

When a dialkylmagnesium reagent is used to prepare the catalyst component the halogen-containing Group III-IVa compound preferred for use is one wherein $M^1$ is boron, with boron trichloride being the most preferred. When a magnesium dialkoxide reagent is used to prepare the catalyst component the halogen-containing Group III-IVa compound preferred for use is one wherein $M^1$ is silicon, with trichlorosilane being the most preferred.

The halogen-containing Group IIIa-IVa element compound is dissolved in a hydrocarbon solvent and added to the catalyst precursor. The hydrocarbon solvent can be any of the well-known inert hydrocarbon solvents such as pentane, hexane, heptane, octane, 2-ethyl hexane, benzene, and toluene, with hexane being preferred. The quantity of halide deposition is such that the halide/magnesium mole ratio falls in the range of from 0.1 to 100.0 preferably in the range of 1.0 to 10.0, with 2.0 to 5.0 being most preferred.

## Titanium Compounds

The titanium compounds useful in preparing catalyst components of this invention is of the general formula $Ti(R)_aX_{4-n}$, where R is an alkyl, aryl, alkoxy or aryloxy group, having from 1 to 20 carbon atoms, X is a halogen, and "n" is equal to or greater than zero and less than four. Examples of the titanium compound include titanium tetrachloride, titanium tetrafloride, titanium tetrabromide, titanium tetraiodide, titanium dibutoxy dichloride, titanium tributoxyl chloride, tetramethoxide, titanium dimethoxydiethoxide, titanium tetraethoxide, titanium tetrapropoxide, titanium tetraisopropoxide, titanium tetra-n-butoxide, titanium tetra isobutoxide, titanium tetratertbutoxide, titanium tetrapentoxide, titanium-iso-pentoxide, titanium tetra-neo-petoxide, titanium tetrahexyloxide, titanium tetra n-heptoxide, titanium tetra-n-octoxide, titanium tetradecycloxide, titanium tetraeicosyloxide, titanium tetracyclohexyloxide, titanium tetrabenzyloxide, titanium tetra-p-tolyloxide, and titanium tetraphenoxide, and mixtures thereof.

When a dialkylmagnesium reagent is used to prepare the catalyst component the titanium compound preferred for use is a titanium tetrahalide, most preferably titanium tetrachloride. When a magnesium dialkoxide reagent is used to prepare the catalyst component the titanium compound preferred or use is a titanium tetraalkoxide, most preferably titanium tetrabutoxide and titanium tetraisobutoxide.

Preferably, the titanium compound is dissolved in a hydrocarbon solvent and added to the support. The quantity of titanium deposition can range from 0.005 to 100 millimoles/g support, preferably in the range of 0.01 to 15 millimoles/g support, with 0.05 to 1.5 millimoles/g support being most preferred.

## Vanadium Compounds

Vanadium compounds which may be usefully employed in the preparation of the catalyst component of this invention are well known in the art and may be represented by the formulas:

(1)
$$\overset{O}{\overset{\|}{VCl_x(OR)_{3-x}}}$$

where "x" is a number from 0 to 3 and R is a hydrocarbon radical having from 1 to 20 carbon atoms,

(2)
$$VCl_y(OR)_{4-y}$$

where "y" is a number from 3 to 4 and R is a hydrocarbon radical having from 1 to 20 carbon atoms,

(3)
$$\overset{(O)_{3-z}}{\overset{\|}{V(AcAc)_z}}$$

where "z" is a number from 2 to 3 and (AcAc) is an acetyl acetonate group,

(4)
$$\begin{array}{c} O \\ \| \\ VCl_2(AcAc) \end{array} \quad \text{or} \quad \begin{array}{c} O \\ \| \\ VCl(AcAc)_2 \end{array}$$

where (AcAc) is an acetyl acetonate group, and

(5) $VCl_3.nB$

where "n" is a number from 2 to 3 and B is a Lewis base, such as tetrahydrofuran, which can form hydrocarbonsoluble complexes with $VCl_3$.

In formulas (1) and (2) above, R preferably represents a $C_1$ to $C_8$ aliphatic radical free of aliphatic unsaturation or an aromatic hydrocarbon radical such as a straight or branched alkyl, aryl, cycloalkyl, alkenyl, or aralkyl group, such as methyl, ethyl, propyl, isopropyl, butyl, n-butyl, i-butyl, t-butyl, pentyl, hexyl, cyclohexyl, octyl, benzyl, dimethyl phenyl, and naphthyl.

Illustrative, but not limiting examples of the vanadium compounds are vanadyl trichloride, vanadium tetrachloride, vanadium tetrabutoxy, vanadium trichloride, vanadyl acetylacetonate, vanadyl dichloroacetylacetonate, vanadyl chloradiacetylacetonate, vanadium trichloride complexed with tetrahydrofuran, vanadyl tribromide, and vanadium tetrabromide. Other illustrative, but not limiting examples of vanadium compounds which are preferred for use when a magnesium dialkoxide is used in forming the catalyst, are triethy vanadate, triisobutyl vanadate, tripropyl vanadate, and triisopropyl vanadate. Preferably the vanadium compound is dissolved in a hydrocarbon solvent and added to the support. The hydrocarbon solvent can be any of the well-known inert hydrocarbon solvents such as hexane, heptane, benzene, and toluene. The quantity of vanadium deposition is usually such as to give a Ti/V mole ratio in the range of from 0.01 to 100.0, preferably in the range of 0.05 to 50.0, with 0.1 to 10.0 being most preferred. The precise level of vanadium deposition is dependent on the range of polymer MWD which it is desirable to achieve in the polymerization.

## Catalyst Component Prepared From Hydrocarbyloxy Metal Compounds

Depending upon the reagents selected for preparation of the catalyst, the preferred procedure for its production will vary. Wherein each of the Mg, Ti and V reagents are hydrocarbyloxy metal compounds, the hydrocarbyloxy metal compounds are each dissolved in the same hydrocarbon solvent to form a homogeneous solution which is then combined with the inert support material to form a slurry and allowed to react. This reaction may be conducted at ambient temperature or, if desired, although not necessary, at elevated temperatures up to about the boiling point of the hydrocarbon solvent employed. Following this reaction, a halogen-containing compound of a Group IVa element and a hydrocarbyl carboxylic acid derivative compound are added to the mixture and allowed to react at ambient temperature, or if desired, elevated temperature. Following this reaction a trialkylaluminium is added to the mixture and allowed to react. Thereafter, solvent may be evaporated and the catalyst component solids may be dried by a purge of nitrogen to a free-flowing powder.

The hydrocarbyl carboxylic acid derivative compounds that may be used are hydrocarbyl carboxylic halides of the formula RCOX and hydrocarbyl carboxylic acid esters of the formula RCOOR' wherein R and R' are each independently alkyl groups of 1 to 20 carbon atoms or aryl groups of 6 to 20 carbon atoms and X is halogen. Illustrative of the useful hydrocarbyl carboxylic acid derivative compounds are benzoyl chloride, ethylbenzoate, methylbenzoate, methylacetate, ethylacetate, acetyl chloride, methylpropioate, ethylproprioate, propionyl chloride, methylbutyrate, ethylbutyrate, and butylryl chloride.

Generally, the reaction steps may be conducted at temperatures in the range of 0°C to 100°C. Preferred temperature ranges are from 25°C to 50°C.

## Catalyst Component Prepared From Dialkyl and Halide Metal Compounds

Wherein the magnesium compound is fully alkylated and the titanium and vanadium compounds are fully halogenated, it is not necessary to employ a hydrocarbyl carboxylic acid derivate or a trialkylaluminum compound in formation of the catalyst component. With such reagents it is preferred to first react the halide compound of a Group IIIa element with the magnesium containing support in a hydrocarbon solvent. Thereafter the titanium halide and vanadium halide compounds may be added, in any order or simultaneously, to the so treated support and permitted to react therewith, at ambient or, if desired but not necessary, elevated temperature. Upon completion of reaction the supernatant of the reaction mixture is decanted. The remaining solid catalyst component particles are washed with a hydrocarbon solvent. The catalyst component is then dried under nitrogen purging.

Generally, the reaction steps may be conducted at temperatures in the range of 0°C to 100°C. Preferred

temperature ranges are from 25°C to 50°C.

Catalyst and Catalyst Systems

The catalyst component prepared in accordance with this invention is usefully employed with cocatalysts well known in the field of the Ziegler catalysis for the polymerization of olefins. The cocatalysts preferably used are organoaluminum compounds.

The organoaluminum compounds employed in this invention can be represented by the general formula $R_m'AlX_{3-m}$ wherein R' represents an alkyl group, cycloalkyl group or aryl group, X represents a halogen atom and "m" represents a suitable numeral equal to or greater than 1 and less than or equal to 3, or mixtures or complex compounds thereof. In particular, it is preferable to employ alkyl aluminum compounds wherein the alkyl groups have from 1 to 18 carbon atoms, preferably 1 to 9 carbon atoms. Illustrative but non-limiting examples of the organoaluminum compounds which may be suitably employed are the trialkylaluminums such as trimetylaluminum, triethylaluminum, tributylaluminum, triisobutylaluminum, tri-n-pentylaluminum, and tri-n-octylaluminum. Illustrative examples of the diaklyaluminum halides are diethylaluminum chloride, diethylaluminum fluoride, dimethylaluminum chloride, dibutylaluminum chloride, diethylaluminum bromide, diethyaluminum iodide and dibutylaluminum iodide. Examples of the monoalkylaluminum dihalides are methylaluminum dichloride, ehtylaluminum dichloride, butylaluminun dichloride, isobutylaluminum dichloride, ethylaluminum dibromide, ethylaluminum diiodide, butylaluminum dibromide, and butylaluminum diiodide. Moreover, the sesquihalides can be suitably employed such as methylaluminum sesquichloride and ethylaluminum sesquichloride.

The organoaluminum compound may conveniently be added to the polymerization reactor in the form of a solution, with a dry hydrocarbon such as hexane, isopentane, heptane, benzene, and toluene. The mole ratio of aluminum to the sum of titanium and vanadium is usually in the range of 1:1 to 1000:1, preferably, from 10:1 to 300:1.

The catalyst system comprising the organoaluminum cocatalyst and the solid catalyst component of this invention is preferably employed for the polymerization of ethylene. However, this catalyst system can also be used to polymerize other alpha-olefins having from 3 to 20 carbon atoms, ethylene copolymers with other alpha-olefins or diolefins.

The catalyst system may be usefully employed to polymerize polyethylene and other 1-olefins. The catalyst is especially useful for the preparation of ethylene/butene-1 and ethylene/hexene-1 copolymer. The olefins can be polymerized in the presence of the catalysts of this invention by any suitable known process such as, for example, suspension, solution and gas-phase processes. The polymers prepared in accordance with this invention can be extruded, mechanically melted, cast or molded as desired. They can be used for plates, sheets, films, and a variety of other articles.

Polymerization Process With MWD Control

The polymerization reaction employing catalytic amounts of the above-described supported catalyst can be carried out under conditions well known in the art of Ziegler polymerization. The catalyst of this invention allows the control of the polymer product MWD during polymerization. The polymer product MWD can be selected within a range of values by the addition during the polymerization reaction into the polymerization reaction zone of predetermined amounts of a halogenated hydrocarbon. The halogenated hydrocarbon can be of the general formula

$$CX'_mX_{4-m}$$

wherein X' is a hydrogen or halogen, X is a halogen, "m" is a number from zero to 3. Preferred halogenated hydrocarbons include the fluoro-hydrocarbons, chlorohydrocarbons, with trichlorofluoromethane ($CCl_3F$, freon-11) or chloroform being most preferred.

EXAMPLES

While the invention is described in accordance with the specific examples below, it is understood that these are only for illustrative purposes. Many alternatives, modifications and variations will be apparent to those skilled in the art in the light of the below examples and as such will fall within the general scope of the claims.

In the Examples following, the silica support was prepared by placing Davison Chemical Company D 948 silica gel having a pore volume of 1.6 $cm^3/g$ and a surface area of 300 $m^2/g$ in a vertical column and fluidizing with an upward flow of nitrogen. The column was heated from ambient temperature to 150 C° at the rate of 25

°C/hr. The temperature was held at 150 C° for four hours. The column was then heated from 150 C° to 500°C at the rate of 150° C/hr. The column was held at the 500°C for four hours. The column was then cooled under nitrogen.

The polymers produced by the catalyst of this invention are characterized as having a "controlled" MWD. The polymer MWD is controlled at the time of polymerization by controlling the amount of halogenated hydrocarbon introduced into the polymerization reaction zone.

Examples 1-7

Examples 1-7 demonstrate the control of polymer MWD by varying the amounts of halogenated hydrocarbon introduced into the polymerization reactor.

Preparation of Catalytic Component

800 grams of silica gel (Davison D948), dried by heating to a temperature of 500°C under nitrogen, was added into a 7.6 liter (two-gallon) reactor. 6200 ml of isopentane solvent was added into the reactor to form a slurry mixture.

0.54 mole of buylethylmagnesium dissolved in heptane (0.68 M) was added to the reactor. The mixture was stirred at ambient temperature for one hour.

0.79 mole of boron trichloride dissolved in hexane (1.00 M) was added to the reactor. The mixture was stirred at ambient temperature for one hour.

0.26 mole of titanium tetrachloride dissolved in hexane (1.00 M) was added to the reactor. The mixture was stirred at ambient temperature for one hour.

0.14 mole of vanadyl trichloride dissolved in hexane (0.70 M) was added to the reactor. The mixture was stirred at ambient temperature for one hour.

The supernatant of the mixture was decanted. The remaining solid was washed once with hexane. The catalyst component was dried under nitrogen purging.

Polymerization

A 2.2 liter autoclave was used for the polymerization reactions. The freshly cleaned reactor was heated to 120C° and flushed with purified nitrogen for 30 minutes. The autoclave was then cooled to room temperature and 850 ml of dry, oxygen-free hexane was added. 0.8 ml of a 25% (w/w) solution of triethylaluminum in heptane was injected into the reactor. The reactor was heated to 85°C. In all but Example 1, a predetermined amount of trichlorofluoromethane was added to the reaction system. 180 millimoles of hydrogen and 20 ml of liquid butene-1 were next added to the reactor. The reactor was then pressurized to 1034 kPa (150 psi) with ethylene. The polymerization reaction was started by injecting 50 mg of the catalyst component prepared as above.

The reaction was allowed to proceed for 40 minutes. At the end of the reaction period the ethylene feed was shut off and the reactor rapidly cooled to room temperature. The reactor was vented to atmospheric pressure and opened. The solid product was recovered by evaporating the solvent. Gel permeation chromatography was used to analyze the polydispersity index of the polymer product.

Results of Examples 1-7 are shown in Table 1. It is noted that, while in the absence of trichlorofluoromethane injection (Example 1), the polymer product had a polydispersity index of 3.0-4.0., the polydispersity index increased with increased amounts of trichlorofluoromethane introduced into the reaction zone (Examples 2-7).

TABLE 1

| Example | Ti/V Ratio (mole) | $CCl_3F$/V Ratio (mole) | Polydpersity Index |
|---|---|---|---|
| 1 | 1.8 | 0 | 3.0-4.0 |
| 2 | 1.8 | 50 | 5.0-6.0 |
| 3 | 1.8 | 100 | 6.0-7.0 |
| 4 | 1.8 | 200 | 7.0-8.0 |
| 5 | 1.8 | 400 | 8.0-9.0 |
| 6 | 1.8 | 800 | 10.0-12.0 |
| 7 | 1.8 | 1600 | 18.8 |

Example 8

A continuous gas fluidized bed reactor was used to carry out the polymerization. The catalyst prepared as described in the preceding paragraph and a triethylaluminum cocatalyst with Al/Ti + V ratio in the range of 30:1 to 60:1 were injected continuously into the fluidized bed reactor at 85°C; 2068 kPa (300 psi) total pressure; butene-1 as comonomer; and hydrogen as chain transfer agent. A molar ratio of 1-butene to ethylene of 0.31:1 and a molar ratio of hydrogen to ethylene of 0.04:1 were maintained during the polymerization. The reaction was run continuously and smoothly at a space time yield of 48-96 kg/hour/m$^3$ (3-6 lb/hour/ft$^3$) while producing a low density polyethylene butene-1 copolymer with a 0.92 g/cm$^3$ gradient density, MI of 2.0 dg/min, polydispersity of 3.0, and bulk density of 352 kg/m$^3$ (22 lb/ft$^3$).

COMPARATIVE EXAMPLES 1-6

Comparative Examples 1-6 demonstrate the absence of control over polymer product MWD when the catalyst component does not contain titanium. The catalyst components for Comparative Examples 1-6 were prepared as for Examples 1-7 above, but omitting the addition of titanium tetrachloride. The polymerization reaction for Comparative Examples 1-6 were also carried out in exactly the same way as for Examples 1-7.

The results of Comparative Examples 1-6 are shown in Table 2. With no addition of trichlorofluoromethane (Comparative Example 1), the activity of the catalyst was very low. Addition of varying amounts of trichlorofluoromethane (Comparative Examples 2-6) into the reaction zone had no effect on the polydispersity index of the polymer product.

TABLE 2

| Comparative Example | Ti/V Ratio (mole) | $CCl_3F$/V Ratio (mole) | Polydpersity Index |
|---|---|---|---|
| 1 | 0 | 0 | [low activity] |
| 2 | 0 | 50 | 7.6 |
| 3 | 0 | 100 | 7.3 |
| 4 | 0 | 200 | 7.1 |
| 5 | 0 | 400 | 7.6 |
| 6 | 0 | 800 | 7.4 |

Examples 9-13

Magnesium 2-methylpentyloxide (0.563 mole) dissolved in 635 ml of heptane, 0.233 mole of titanium isobutoxide liquid, and 0.292 mole of isobutyl vanadate were mixed in a flask to form a homogeneous solution. This solution was added into a reactor containing 4000 cm$^3$ of isopentane and 800 grams of 500°C dried Davison 948X silica gel with average particle size of 30 μm. The resulting mixture was allowed to react at room temperature for 60 minutes. A mixture containing 3.184 mole of $HSiCl_3$ liquid and 0.535 mole benzoyl chloride liquid was injected into the reactor and the mixture was allowed to react at room temperature for 60 minutes. Finally, 0.412 moles of tri-n-hexylaluminum (TNHAL) dissolved in 635 cm$^3$ of heptane was added to the mixture at room temperature and it was stirred for 60 minutes. The mixture turned to brown color after the addition of TNHAL. The product was dried by purging with N at 63°C to a free-flowing state.

Polymerization

A 2.2 liter autoclave was used for the polymerization reactions. The freshly cleaned reactor was heated to 60°C and flushed with purified nitrogen for 30 minutes. The autoclave was then cooled to room temperature and 850 ml of dry, oxygen-free hexane was added. 0.8 ml of triethylaluminum in heptane solution (1.67 M) was injected into the reactor. The reactor was heated to 85°C. In all but Example 9, a predetermined amount of trichlorofluoromethane (as a 1M solution in hexane) was added to the reaction system. 80 millimoles of hydrogen and 20 ml of liquid butene-1 were next added to the reactor. The reactor was then pressurized to 150 psi with ethylene. The polymerization reaction was started by injecting 50 mg of the catalyst component prepared as above.

The reaction was allowed to proceed for 40 minutes. At the end of the reaction period the ethylene feed was shut off and the reactor rapidly cooled to room temperature. The reactor was vented to atmospheric pressure and opened. The solid product was recovered by evaporating the solvent.

Results of Examples 9-13 are shown in Table 3. It is noted that, while in the absence of trichlorofluoromethane injection, (Example 9), the polymer product had a melt index ratio (MIR) of 29.0, the polydispersity of the produced resin, as indicated by the melt index ratio, increased as the amount of trichlorofluoromethane introduced into the reaction zone increased (Examples 10-13).

TABLE 3

Polymerization Data

| Example | H mmole | $CCl_3F$ (1M in hexane) $cm^3$ | Yield gram | MI dg/min | MIR |
|---|---|---|---|---|---|
| 9 | 80 | 0 | 121 | 0.40 | 29.0 |
| 10 | 50 | 0.23 | 85 | 0.30 | 47.0 |
| 11 | 50 | 0.67 | 72 | 0.60 | 51.3 |
| 12 | 40 | 1.13 | 70 | 0.70 | 72.0 |
| 13 | 30 | 1.13 | 75 | 0.20 | 75.0 |

Polymerization conditions:

850 $cm^3$ hexane, 20 $cm^3$ 1-butene, 85°C
1034kPaG (150 psig) total pressure, 50 mg catalyst,
and 40 min reaction period.

The principle of the invention, a detailed description of specific applications of the principle, and the best mode in which is it contemplated to apply that principle have been described. It is to be understood that the foregoing is illustrative only and that other means and techniques can be employed without departing from the true scope of the invention defined in the following claims.

## Claims

1. Supported catalyst component for use in a catalyst system which is capable of producing a polyolefin of a molecular weight distribution value which is controllable as a function of an amount of a halogenated hydrocarbon compound added to an olefin monomer reaction zone wherein said catalyst system is present, said catalyst component comprising a composition resulting from treatment of an inert support material with an organometallic compound of a Group IIa element, a halide compound of a Group IIIa-IVa element, a Group IVb metal compound and a Group Vb metal compound.

2. Component according to claim 1 wherein the organometallic compound of Group IIa element is contacted with the inert support material in an amount sufficient to deposit an average of from 0.01 to 1000 millimoles of Group IIa element on each gram of inert support material, optionally with the organometallic compound of a Group IIa element being a dialkylmagnesium compound or a magnesium alkoxide compound.

3. Component according to claim 2 wherein the inert support material deposited with magnesium is treated with a quantity of the halide compound of a Group IIIa-IVa element sufficient to provide said material with a halide to magnesium mole ratio of from 0.1 to 100, and wherein preferably the inert support material having a halide to magnesium ratio of from 0.1 to 100 is reacted with a titanium compound and a vanadium compound sufficient to provide said support material with from 0.005 to 100 millimoles of titanium metal per gram of support material and with vanadium metal in an amount such that the titanium to vanadium metal mole ratio is from 0.01 to 100.

4. The catalyst component according to any of the preceding claims wherein the halide compound of a Group IIIa-IVa element has the formula:

$$H_aM^1X^1{}_bR^1{}_{(c-b-a)}$$

wherein $M^1$ is boron carbon, silicon or mixtures thereof; $X^1$ is a halogen;

$R^1$ is a hydrocarbyl or alkoxy radical having 1 to 20 carbon atoms;

"a" is zero when $M^1$ is boron and is a number greater than zero and less than or equal to 2 when $M^1$ is silicon or carbon;

"b" is a number equal to or greater than 1 when $M^1$ is boron and greater than 1 when $M^1$ is silicon or carbon; and

"c" is the maximum valency of the element $M^1$ being preferably boron compound such as boron trichloride or a halosilane; and/or wherein the group IVb metal compound is a titanium compound of the general formula:

$$Ti(OR)_nX_{4-n}$$

wherein R is an alkyl or aryl group, X is a halogen, and "n" is equal to or greater than zero and less than four preferably a titanium alkoxide and/or wherein the group Vb metal compound is a of vanadium compound the general formulas:

(1)
```
O
||
VClx(OR)3-x
```
$$\overset{O}{\overset{||}{V}}Cl_x(OR)_{3-x}$$

where "x" is a number from 0 to 3 and R is hydrocarbon radical,

(2) $$VCl_y(OR)_{4-y}$$

where "y" is a number from 3 to 4 and R is a hydrocarbon radical,

(3)
$$\overset{(O)_{3-z}}{\overset{||}{V}}(AcAc)_z$$

where "z" is a number from 2 to 3 and (AcAc) is an acetyl acetonate group,

(4)
$$\overset{O}{\overset{||}{V}}Cl_2(AcAc) \quad \text{or} \quad \overset{O}{\overset{||}{V}}Cl(AcAc)_2$$

where (AcAc) is an acetyl acetonate group, and

(5) $$VCl_3.nB$$

where "n" is a number from 2 to 3 and B is a Lewis base, such as tetrahydrofuran, which can form hydrocarbon-soluble complexes with VCl preferably an alkoxy vanadate; and/or wherein the inert support material is silica.

**5.** Component according to any of claims 2 to 4 wherein, in preparation, the magnesium alkoxide compound and the Group IVb and Group Vb metal compounds are placed in a hydrocarbon solvent in homogeneous solution and the inert support material is treated with said homogeneous solution.

**6.** Component according to claim 5 wherein after treatment of the inert support material with the homogeneous solution the so-treated support is further treated with a halide compound of a Group IVa element and a hydrocarbyl carboxylic acid derivative which is preferably of the formula:

RCOOX, or

RCOOR'

wherein R and R' are each independently an alkyl or aryl group and X is halogen.

7. Component according to claim 6 wherein after treatment of the supported catalyst precursor with the halide compound of a Group IVa element and hydrocarbyl carboxylic acid derivatives, the so-treated support is further treated with an organoaluminum compound.

8. Component according to any of the preceding claims wherein the support is treated with the organoaluminum compound in an amount sufficient to provide a ratio of aluminum atom to the sum of titanium and vanadium atoms of from 0.1 to 10.

9. Supported catalyst system which is capable of producing a polyolefin of a molecular weight distribution value which is controllable as a function of the amount of a halogenated hydrocarbon compound added to an olefin monomer reaction zone wherein said catalyst system is present, comprising:
(a) a component according to any of claims 1 to 6 and
(b) an organoaluminum compound.

10. Catalyst system according to claim 9 wherein the organoaluminum compound is of the general formula

$$Al(R)_{3-y}X_y$$

wherein X is a halogen and "y" is equal to or greater than zero and less than or equal to three and is preferably a trialkylaluminum.

11. Catalyst system according to claims 9 or 10 wherein the organometallic compound of a Group IIa element is contacted with the inert support material in an amount sufficient to deposit an average of from 0.01 to 1000 millimoles of Group IIa element on each gram of inert support material.

12. Catalyst system according to any of claims 10 to 11 wherein the organoaluminum compound is present in an amount sufficient to provide the catalyst system with an aluminum to titanium and vanadium metal mole ratio of from 1:1 to 100:1.

13. Catalyst system according to any of claims 10 to 12 wherein the trialkylaluminum compound is trimethylaluminum, triethylaluminum, triisobutaluminum or tri-n-hexyaluminum.

14. A method for producing a polyolefin comprising the steps of:
providing to a reaction zone a catalyst system according to any of claims 9 to 13; and supplying to said reaction zone a controlled amount relative to the catalyst system of a quantity of a halogenated hydrocarbon compound.

15. Method according to claim 14 wherein said halogenated hydrocarbon compound is of the formula

$$CX'_mX_{4-m}$$

wherein X' is hydrogen or halogen, X is halogen, and "m" is a number from zero to 3.

## Patentansprüche

1. Trägergestützte Katalysatorkomponente zur Verwendung in einem Katalysatorsystem, das in der Lage ist, ein Polyolefin mit einem Molekulargewichtsverteilungswert herzustellen, der als Funktion einer Menge einer halogenierten Kohlenwasserstoffkomponente steuerbar ist, die einer Olefinmonomer-Reaktionszone zugesetzt wird, in der das Katalysatorsystem vorhanden ist, wobei die Katalysatorkomponente eine Zusammensetzung umfaßt, die aus der Behandlung eines inerten Trägermaterials mit einer organometallischen Verbindung eines Gruppe IIa-Elements, einer Halogenidverbindung eines Gruppe IIIa-IVa-Elements, einer Gruppe IVb-Metallverbindung und einer Gruppe Vb-Metallverbindung resultiert.

2. Komponente nach Anspruch 1, bei der die organometallische Verbindung des Gruppe IIa-Elements mit dem inerten Trägermaterial in einer ausreichenden Menge kontaktiert wird, um durchschnittlich 0,01 bis 1 000 mmol Gruppe IIa-Element auf jedes Gramm inertes Trägermaterial aufzubringen, wobei gegebenenfalls die organometallische Verbindung eines Gruppe IIa-Elements eine Dialkylmagnesiumverbindung oder eine Magnesium-alkoxidverbindung ist.

3. Komponente nach Anspruch 2, bei der das inerte Trägermaterial, auf das Magnesium aufgebracht worden ist, mit einer ausreichenden Menge der Halogenidverbindung eines Gruppe IIIa-IVa-Elements behandelt wird, um das Material mit einem Halogenid-zu-Magnesium-Molverhältnis von 0,1 bis 100 zu versehen,

wobei vorzugsweise das inerte Trägermaterial mit einem Halogenid-zu-Magnesium-Verhältnis von 0,1 bis 100 mit einer Titanverbindung und einer Vanadiumverbindung in ausreichender Menge umgesetzt wird, um das Trägermaterial mit 0,005 bis 100 mmol Titanmetall pro Gramm Trägermaterial und mit Vanadiummetall in einer solchen Menge zu versehen, daß das Titan-zu-Vanadiummetall-Molverhältnis 0,01 bis 100 beträgt.

**4.** Katalysatorkomponente nach einem der vorhergehenden Ansprüche, bei der die Halogenidverbindung eines Gruppe IIIa-IVa-Elements die Formel

$$H_aM^1X^1_bR^1_{(c-b-a)}$$

aufweist, wobei $M^1$ Bor, Kohlenstoff, Silicium oder Mischungen daraus ist, $X^1$ Halogen ist, $R^1$ ein Kohlenwasserstoffoder Alkoxyrest mit 1 bis 20 Kohlenstoffatomen ist, "a" 0 ist, wenn $M^1$ Bor ist und eine Zahl größer als 0 und weniger als oder gleich 2 ist, wenn $M^1$ Silicium oder Kohlenstoff ist, "b" eine Zahl gleich oder größer als 1 ist, wenn $M^1$ Bor ist, und größer als 1 ist, wenn $M^1$ Silicium oder Kohlenstoff ist, und "c" die maximale Wertigkeit des Elements $M^1$ ist, und vorzugsweise eine Borverbindung wie Bortrichlorid oder ein Halogensilan ist, und/oder bei der die Gruppe IVb-Metallverbindung eine Titanverbindung mit der allgemeinen Formel

$$Ti(OR)_nX_{4-n}$$

, wobei R eine Alkyl- oder Arylgruppe ist, X Halogen ist und "n" gleich oder größer als 0 und weniger als 4 ist, und vorzugsweise ein Titanalkoxid ist, und/oder bei der die Gruppe Vb-Metallverbindung eine Vanadiumverbindung mit den allgemeinen Formeln:

(1) 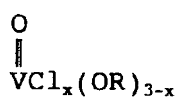

, wobei "x" eine Zahl von 0 bis 3 und R ein Kohlenwasserstoffrest ist,

(2) $VCl_y(OR)_{4-y}$

, wobei "y" eine Zahl von 3 bis 4 und R ein Kohlenwasserstoffrest ist,

(3) 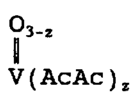

, wobei "z" eine Zahl von 2 bis 3 und (AcAc) eine Acetylacetonatgruppe ist,

(4) 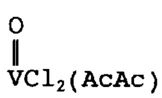 oder 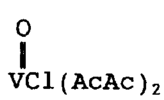

wobei (AcAc) eine Acetylacetonatgruppe ist, und

(5) $VCl_3 \cdot nB$

, wobei "n" eine Zahl von 2 bis 3 und B eine Lewisbase wie Tetrahydrofuran ist, die kohlenwasserstofflösliche Komplexe mit $VCl_3$ bilden kann, und vorzugsweise ein Alkoxyvanadat ist, und/oder bei der das inerte Trägermaterial Siliciumdioxid ist.

**5.** Komponente nach einem der Ansprüche 2 bis 4, bei der bei der Herstellung die Magnesiumalkoxidverbindung und die Gruppe IVb- und Gruppe Vb-Metallverbindungen in einem Kohlenwasserstofflösungsmittel in homogener Lösung vorliegen und das inerte Trägermaterial mit der homogenen Lösung behandelt wird.

**6.** Komponente nach Anspruch 5, bei der nach Behandlung des inerten Trägermaterials mit der homogenen Lösung der so behandelte Träger außerdem mit einer Halogenidverbindung eines Gruppe IVa-Elements und einem Kohlenwasserstoffcarbonsäurederivat behandelt wird, das vorzugsweise die Formel

RCOOX oder RCOOR'

aufweist, wobei R und R' jeweils unabhängig eine Alkyl- oder Arylgruppe sind und X Halogen ist.

7. Komponente nach Anspruch 6, bei der nach Behandlung des trägergestützten Katalysatorvorläufers mit der Halogenidverbindung eines Gruppe IVa-Elements und Kohlenwasserstoffcarbonsäurederivaten der so behandelte Träger außerdem mit einer Organoaluminiumverbindung behandelt wird.

8. Komponente nach einem der vorhergehenden Ansprüche, bei der der Träger mit der Organoaluminumverbindung in einer ausreichenden Menge behandelt wird, um ein Verhältnis von Aluminiumatom zu der Summe aus Titan- und Vanadiumatomen von 0,1 bis 10 zu liefern.

9. Trägergestütztes Katalysatorsystem, das in der Lage ist, ein Polyolefin mit einem Molekulargewichtsverteilungswert herzustellen, der als Funktion einer Menge einer halogenierten Kohlenwasserstoffkomponente steuerbar ist, die einer Olefin-monomer-Reaktionszone zugesetzt wird, in der das Katalysatorsystem vorhanden ist, das
   (a) eine Komponente nach einem der Ansprüche 1 bis 6 und
   (b) eine Organoaluminiumverbindung
   umfaßt.

10. Katalysatorsystem nach Anspruch 9, bei dem die Organoaluminiumverbindung die allgemeine Formel

$$Al(R)_{3-y}X_y$$

aufweist, wobei X Halogen ist und "y" gleich oder größer als 0 und weniger als oder gleich 3 ist, und vorzugsweise Trialkylaluminium ist.

11. Katalysatorsystem nach Anspruch 9 oder 10, bei dem die organometallische Verbindung eines Gruppe IIa-Elements mit dem inerten Trägermaterial in einer ausreichenden Menge kontaktiert wird, um durchschnittlich 0,01 bis 1 000 mmol Gruppe IIa-Element auf jedes Gramm inertes Trägermaterial aufzubringen.

12. Katalysatorsystem nach einem der Ansprüche 10 oder 11, bei dem die Organoaluminiumverbindung in einer ausreichenden Menge vorhanden ist, um das Katalysatorsystem mit einem Molverhältnis von Aluminium zu Titan- und Vanadiummetall von 1:1 bis 100:1 zu versehen.

13. Katalysatorsystem nach einem der Ansprüche 10 bis 12, bei dem die Trialkylaluminiumverbindung Trimethylaluminium, Triethylaluminium, Triisobutylaluminium oder Tri-n-hexylaluminium ist.

14. Verfahren zur Herstellung eines Polyolefins, bei dem eine Reaktionszone mit einem Katalysatorsystem gemäß einem der Ansprüche 9 bis 13 versehen wird, und der Reaktionszone eine gesteuerte Menge relativ zu dem Katalysatorsystem von einer halogenierten Kohlenwasserstoffverbindung zugeführt wird.

15. Verfahren nach Anspruch 14, bei dem die halogenierte Kohlenwasserstoffverbindung die Formel

$$CX'_mX_{4-m}$$

aufweist, wobei X' Wasserstoff oder Halogen ist, X Halogen ist und "m" eine Zahl von 0 bis 3 ist.

## Revendications

1. Composant de catalyseur déposé sur un support, destiné à être utilisé dans un système catalyseur qui est capable de produire une polyoléfine dont la distribution de poids moléculaire a une valeur qui est réglable en fonction d'une quantité d'un composé hydrocarboné halogéné ajouté dans une zone de réaction d'un monomère oléfinique dans laquelle ledit système catalyseur est présent, le composant de catalyseur comprenant une composition résultant du traitement d'une matière de support inerte avec un composé organométallique d'un élément du Groupe IIa, un halogénure d'un élément des Groupes IIIa-IVa, un composé de métal du Groupe IVb et un composé de métal du Groupe Vb.

2. Composant suivant la revendication 1, dans lequel le composé organométallique de l'élément du Groupe IIa est mis en contact avec la matière de support inerte en une quantité suffisante pour déposer en moyenne 0,01 à 1000 millimoles d'élément du Groupe IIa sur chaque gramme de matière de support inerte, le composé organométallique d'un élément du Groupe IIa étant un dialkyl-magnésium ou un alcoolate de

magnésium.

3. Composant suivant la revendication 2, dans lequel la matière de support inerte portant un dépôt de magnésium est traitée avec une quantité de l'halogénure d'un élément des Groupes IIIa-IVa suffisante pour doter la matière d'un rapport molaire de l'halogénure au magnésium de 0,1 à 100, et dans lequel la matière de support inerte ayant un rapport halogénure:magnésium de 0,1 à 100 est amenée à réagir avec un composé de titane et un composé de vanadium suffisamment pour que ladite matière de support soit pourvue de 0,005 à 100 millimoles de titane métallique par gramme de matière de support, et de vanadium métallique en une quantité telle que le rapport molaire du titane au vanadium ait une valeur de 0,01 à 100.

4. Composant de catalyseur suivant l'une quelconque des revendications précédentes, dans lequel l'halogénure d'un élément des Groupes IIIa-IVa répond à la formule générale

$$H_aM^1X^1_bR^1_{(c-b-a)}$$

dans laquelle $M^1$ représente le bore, le carbone, le silicium ou des mélanges de ces éléments ; $X^1$ est un halogène ;

$R^1$ est un radical hydrocarbyle ou alkoxy ayant 1 à 20 atomes de carbone ;

"a" est égal à 0 lorsque $M^1$ est du bore et est un nombre supérieur à 0 et inférieur ou égal à 2 lorsque $M^1$ est du silicium ou du carbone ;

"b" est un nombre égal ou supérieur à 1 lorsque $M^1$ est du bore et supérieur à 1 lorsque $M^1$ est du silicium ou le carbone ;

et

"c" est la valence maximale de l'élément $M^1$ qui est de préférence un composé de bore tel que du trichlorure de bore ou un halogénosilane ; et/ou dans lequel le composé de métal du Groupe IVb est un composé de titane de formule générale :

$$Ti(OR)_nX_{4-n}$$

dans lequel R est un groupe alkyle ou aryle, X est un halogène et "n" est égal ou supérieur à 0 et inférieur à 4, de préférence un alcoolate de titane et/ou dans lequel le composé de métal du Groupe Vb est un composé de vanadium de formules générales :

(1)
$$\overset{O}{\overset{\|}{VCl_x}}(OR)_{3-x}$$

où "x" est un nombre de 0 à 3 et R est un radical hydrocarboné,

(2) $$VCl_y(OR)_{4-y}$$

où "y" est un nombre de 3 à 4 et R est un radical hydrocarboné,

(3)
$$\overset{(O)_{3-z}}{\overset{\|}{V}}(AcAc)_z$$

où "z" est un nombre de 2 à 3 et (AcAc) est un groupe acétylacétonate,

(4)
$$\overset{O}{\overset{\|}{VCl_2}}(AcAc) \quad ou \quad \overset{O}{\overset{\|}{VCl}}(AcAc)_2$$

où (AcAc) est un groupe acétyl-acétonate, et

(5) $$VCl_3.nB$$

où "n" est un nombre de 2 à 3 et B est une base de Lewis telle que le tétrahydrofuranne, qui peut former des complexes solubles dans les hydrocarbures avec VCl, de préférence un alkoxy-vanadate, et/ou dans lequel la matière de support inerte est de la silice.

5. Composant suivant l'une quelconque des revendications 2 à 4, dans lequel, au cours de la préparation, l'alcoolate de magnésium et les composés métalliques des groupes IVb et Vb sont mis en solution homogène dans un solvant hydrocarboné et la matière de support inerte est traitée avec cette solution homogène.

6. Composant suivant la revendication 5, dans lequel, après traitement de la matière de support inerte avec la solution homogène, le support ainsi traité est encore traité avec un halogénure d'un élément du Groupe IVa et un dérivé d'acide hydrocarbyl-carboxylique qui répond avantageusement à la formule :

$$RCOOX, \text{ ou}$$
$$RCOOR'$$

dans laquelle R et R' représentent chacun, indépendamment, un groupe alkyle ou un groupe aryle et X est un halogène.

7. Composant suivant la revendication 6, dans lequel après traitement du précurseur de catalyseur déposé sur le support avec l'halogénure d'un élément du Groupe IVa et des dérivés d'acides hydrocarbyl-carboxyliques, le support ainsi traité est encore traité avec un composé organique d'aluminium.

8. Composant suivant l'une quelconque des revendications précédentes, dans lequel le support est traité avec le composé organique d'aluminium en une quantité suffisante pour établir un rapport de l'atome d'aluminium à la somme des atomes de titane et de vanadium de 0,1 à 10.

9. Système de catalyseur fixé sur un support, qui est capable de produire une polyoléfine dont la distribution de poids moléculaire a une valeur qui est réglable en fonction de la quantité d'un hydrocarbure halogéné ajoutée dans une zone de réaction de monomères oléfiniques dans laquelle ce système de catalyseur est présent, comprenant :
   (a) un composant suivant l'une quelconque des revendications 1 à 6 et
   (b) un composé organique d'aluminium.

10. Système de catalyseur suivant la revendication 9, dans lequel le composé organique d'aluminium répond à la formule générale :

$$Al(R)_{3-y}X_y$$

dans laquelle X est un halogène et "y" est égal ou supérieur à 0 et inférieur ou égal à 3, ce composé étant de préférence un trialkylaluminium.

11. Système de catalyseur suivant la revendication 9 ou 10, dans lequel le composé organométallique d'un élément du Groupe IIa est mis en contact avec la matière de support inerte en une quantité suffisante pour déposer en moyenne 0,01 à 1000 millimoles d'élément du Groupe IIa sur chaque gramme de matière de support inerte.

12. Système de catalyseur suivant l'une ou l'autre des revendications 10 et 11, dans lequel le composé organique d'aluminium est présent en une quantité suffisante pour doter le système de catalyseur d'un rapport molaire de l'aluminium au titane et au vanadium métallique de 1:1 à 100: 1.

13. Système de catalyseur suivant l'une quelconque des revendications 10 à 12, dans lequel le trialkylaluminium est le triméthylaluminium, le triéthylaluminium, le triisobutylaluminium ou le tri-n-hexylaluminium.

14. Procédé de production d'une polyoléfine, qui comprend les étapes consistant :
   à introduire dans une zone de réaction un système de catalyseur suivant l'une quelconque des revendications 9 à 13 ; et à faire arriver dans cette zone de réaction une quantité d'hydrocarbure halogéné réglé par rapport au système de catalyseur.

15. Procédé suivant la revendication 14, dans lequel l'hydrocarbure halogéné répond à la formule

$$CX'_mX_{4-m}$$

dans laquelle X' est de l'hydrogène ou un halogène, X est un halogène et "m" est un nombre de 0 à 3.